Europäisches Patentamt

European Patent Office

Office européen des brevets

(11) Veröffentlichungsnummer: **0 008 050**
A1

## (12) EUROPÄISCHE PATENTANMELDUNG

(21) Anmeldenummer: 79102696.6

(22) Anmeldetag: 30.07.79

(51) Int. Cl.³: **B 23 Q 7/00,** B 21 D 43/00,
B 23 B 13/00, B 23 K 31/00,
B 65 H 69/08

(30) Priorität: 03.08.78 DE 2834020

(43) Veröffentlichungstag der Anmeldung: 20.02.80
Patentblatt 80/4

(84) Benannte Vertragsstaaten: DE FR GB IT SE

(71) Anmelder: **Industrie-Werke Karlsruhe Augsburg
Aktiengesellschaft, Gartenstrasse 71, D-7500
Karlsruhe 1 (DE)**

(72) Erfinder: **Steinhart, Wilhelm, Buchenstrasse 12,
D-8901 Harthausen (DE)**
Erfinder: **Tradt, Georg, Lechfeldstrasse 30, D-8904
Friedberg (DE)**
Erfinder: **Zimmer, Ernst, Michael-Steinherr-Strasse 34,
D-8904 Friedberg (DE)**

(74) Vertreter: **Ernicke, Hans-Dieter, Dipl.-Ing.,
Schwibbogenplatz 2b, D-8900 Augsburg (DE)**

(54) **Verfahren und Vorrichtung zum Verarbeiten handelsüblichen Stangenmaterials.**

㊼ Bei einer Vorrichtung zum Zuführen von nacheinander durch eine Schweißmaschine (3) zu einer Endlos-stange (8) verschweißten handelsüblichen metallischen Stangenwerkstoffes (1, 2) zu einer stangenverarbeitenden Werkzeugmaschine (11), ist eine Führungseinheit (10) vorgesehen, welche die Endlos-Stange (8) aufnimmt und auf einer im wesentlichen bogenförmigen Bahn einer Verarbeitungseinheit (11) zuführt, wobei die Führungsbahn selbst entsprechend den unterschiedlichen Verarbeitungszeiten von Schweißmaschine (3) und Verarbeitungseinheit (11) durch zwei Grenz-Radien (R, R') bestimmt ist.

0008050

Verfahren und Vorrichtung zum Verarbeiten
handelsüblichen Stangenmaterials

_____

Die vorliegende Erfindung bezieht sich auf ein Verfahren zum Verarbeiten handelsüblichen Stangenmaterials und auf eine Vorrichtung zur Durchführung dieses Verfahrens.

Gemäß den bekannten und demzufolge in praxi auch angewandten Verfahren wird das handelsübliche Stangenmaterial in der jeweils vorhandenen Länge (etwa 6 bis 8 m) einer Verarbeitungseinheit zugeführt. Je nach Art dieser Einheit werden die einzelnen Stangen bearbeitet, und zwar z.B. in Stücke zersägt und anschließend gesenkgeschmiedet. Bei

0008050

dieser bekannten Verfahrensweise bleibt nun am Ende jeder Stange ein mehr oder weniger langes Reststück als Abfall übrig. Dies bedeutet im Hinblick auf Automation und Serienfertigung aber auch, daß jeweils am Ende einer einzelnen Stange ein Arbeitstakt notwendig ist, um das Reststück auszuwerfen. Die bekannten Verfahren sind mithin mit den Nachteilen Materialverlust und Arbeitszeitverlust belastet.

Die der vorliegenden Erfindung zugrundeliegende Aufgabe besteht darin, die genannten Nachteile zu vermeiden.

Diese Aufgabe wird verfahrensmäßig dadurch gelöst, daß die handelsüblichen Stangen einzeln nacheinander zu einer Endlos-Stange verbunden werden und daß diese Endlos-Stange einer das Material verarbeitenden Einheit zugeführt wird.

Eine erfindungsgemäße Vorrichtung zur Durchführung dieses Verfahrens ist dadurch charakterisiert, daß ein Stangenmagazin zur Abgabe der handelsüblichen Stangen vorgesehen ist, daß eine Schweißmaschine vorgesehen ist, in der nacheinander die Stangen aneinandergeschweißt werden, und daß eine Führungseinheit vorgesehen ist, welche die Endlos-Stange aufnimmt und auf einer im wesentlichen bogenförmigen Bahn einer Verarbeitungseinheit zuführt, wobei die Führungsbahn selbst entsprechend den unterschiedlichen Verarbeitungszeiten von Schweißmaschine und Verarbeitungseinheit durch zwei Grenz-Radien bestimmt ist.

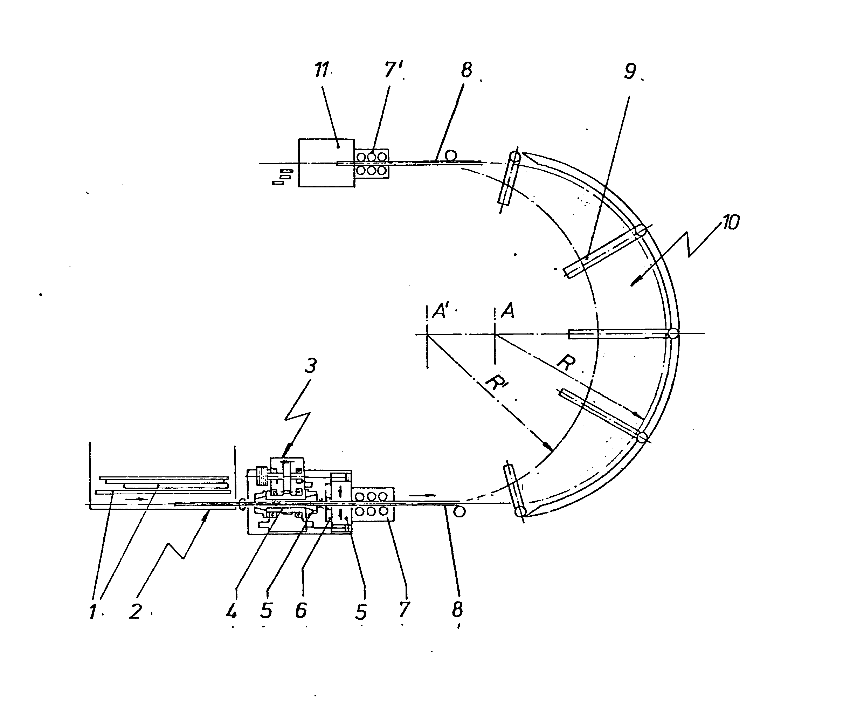

Das erfindungsgemäße Verfahren wird im Folgenden anhand der in der Figur dargestellten erfindungsgemäßen Vorrichtung erläutert.

Die zu verarbeitenden handelsüblichen Stangen 1 liegen in einem Stangenmagazin 2 zur Entnahme bereit. Stange für Stange wird über Transportmittel einer Reibschweißmaschine 3 zugeführt und auf der Basis des bekannten Reibschweißverfahrens an die jeweils vorher dem Stangenmagazin 2 entnommene Stange angeschweißt.

Die der Durchführung des erfindungsgemäßen Verfahrens dienende Reibschweißmaschine unterscheidet sich von den herkömmlichen dadurch, daß eine Hohlspindel 4 zur Aufnahme der einzelnen Stangen 1 vorgesehen ist und daß besondere Kraftspannvorrichtungen 5 vorgesehen sind, die geeignet sind, neben den beim Reiben auftretenden Drehmomenten auch die axial auftretenden Reib- und Stauchkräfte aufzunehmen.

In der Reibschweißmaschine 3 ist ferner eine Schereinheit 6 integriert, mit der unmittelbar nach dem Schweißvorgang der an der Schweißstelle entstandene Grat abgestanzt und, damit er auch abfallen kann, geteilt wird.

0008050

Am Ausgang der Reibschweißmaschine 3 steht eine Vorschubeinheit 7, die das Stangenmaterial bzw. die entstandene Endlos-Stange 8 erfaßt und quasi aus der Reibschweißmaschine 3 herauszieht. Über eine Mehrzahl von Auflagerollen 9 wird die Endlos-Stange 8 auf einer halbkreisförmigen Führungseinheit 10 der Verarbeitungseinheit 11 bzw. der dieser vorgeschalteten Vorschubeinheit 7' zugeführt. In der Verarbeitungseinheit 11 wird nunmehr die Endlos-Stange 8 verarbeitet.

Der Kern der vorliegenden Erfindung besteht nun darin, daß auf Grund der Aufgabenstellung minimaler Materialverlust (durch den beim Schweißen entstehenden und abgestanzten Grat entsteht auch hier ein gewisser Materialverlust) und kontinuierliches Arbeiten, zwischen der Reibschweißmaschine 3 einerseits und der Verarbeitungseinheit 11 andererseits eine Art Materialpuffer geschaffen werden muß. Dieser Materialpuffer ist dadurch realisiert, daß die Bahn der Endlos-Stange 8 zwischen der abgebenden und der aufnehmenden Einheit variabel ist. Dabei muß die "Speicherkapazität" gerade so groß sein, daß die Länge einer einzelnen Stange 1 untergebracht werden kann. Aus Gründen der Synchronisierung zwischen Reibschweißmaschine 3 und Verarbeitungseinheit 11 ist mithin der Materialpuffer gerade so groß zu dimensionieren, daß die Verarbeitungseinheit 11 während eines Schweißvorgangs genügend Material von der Endlos-Stange 8 abnehmen kann und daß die Reibschweißmaschine 3 nach einem Schweißvorgang das einer Stange entsprechende Stück nachschieben kann.

Beim letztgenannten Vorgang entsteht – bezogen auf die Darstellung in der Figur – eine halbkreisförmige Führungsbahn mit dem Radius R, dessen Basispunkt in A liegt. Während nun zeitlich gesehen in der Reibschweißmaschine 3 die nächste Stange angeschweißt wird, entnimmt die Verarbeitungseinheit 11 kontinuierlich – entsprechend ihrer Aufgabenstellung – Material von der Endlos-Stange 8. Dadurch verschiebt sich der Basispunkt der halbkreisförmigen Führungsbahn kontinuierlich nach A' und der Halbkreis hat nunmehr den Radius R'. Nach Ablauf der Schweißzeit wird nunmehr der Halbkreisbogen auf Grund des Nachschiebens der zuletzt angeschweißten Stange wieder nach außen gedrückt (Mittelpunkt A; Radius R).

Um ein stets einwandfreies Arbeiten zu gewährleisten, werden die Vorschubeinheiten 7 und 7' mittels besonderer, aber an sich bekannter Steuermittel überwacht.

Es soll abschließend darauf verwiesen werden, daß die Radien der Führungsbahn für die Endlos-Stange mit Rücksicht auf den Querschnitt und die Materialeigenschaften so zu wählen sind, daß die auftretenden Biegespannungen keine elastische Verformung verursachen können.

Letztlich soll noch darauf hingewiesen werden, daß hinsichtlich der Führung der Endlos-Stange zwischen der Schweißmaschine und der Verarbeitungseinheit eine Vielzahl von Lösungen denkbar ist.

5 Das mit der vorliegenden Erfindung erreichte Minimum an Materialverlust sowie die durch den kontinuierlichen Arbeitsablauf eingesparte Zeit ergeben eine erhebliche Steigerung der Wirtschaftlichkeit bei der Verarbeitung von Stangenmaterial.

0008050

**P A T E N T A N S P R Ü C H E**

1. Verfahren zum Verarbeiten handelsüblichen Stangenmaterials,

   dadurch gekennzeichnet,

   daß die handelsüblichen Stangen (1) einzeln nacheinander zu einer Endlos-Stange (8) verbunden werden
   und daß diese Endlos-Stange (8) einer das Material
   verarbeitenden Einheit (11) zugeführt wird.

2. Verfahren nach Anspruch 1,

   dadurch gekennzeichnet,

   daß die Endlos-Stange (8) zwischen der die Einzelstangen (1) verbindenden Einheit (3) und der verarbeitenden Einheit (11) so geführt ist, daß in der letztgenannten Einheit eine kontinuierliche Verarbeitung
   der Endlos-Stange (8) möglich ist.

3. Verfahren nach Anspruch 1 oder 2,

   dadurch gekennzeichnet,

   daß die Einzelstangen (1) miteinander verschweißt
   werden.

0008050

4. Vorrichtung zur Durchführung des Verfahrens nach einem der Ansprüche 1 bis 3,

'dadurch gekennzeichnet,

daß ein Stangenmagazin (2) zur Abgabe der handelsüblichen Stangen (1) vorgesehen ist, daß eine Schweißmaschine (3) vorgesehen ist, in der nacheinander die Stangen (1) aneinandergeschweißt werden,

und daß eine Führungseinheit (10) vorgesehen ist, welche die Endlos-Stange (8) aufnimmt und auf einer im wesentlichen bogenförmigen Bahn einer Verarbeitungseinheit (11) zuführt, wobei die Führungsbahn selbst entsprechend den unterschiedlichen Verarbeitungszeiten von Schweißmaschine (3) und Verarbeitungseinheit (11) durch zwei Grenz-Radien (R, R') bestimmt ist.

5. Vorrichtung nach Anspruch 4,

dadurch gekennzeichnet,

daß am Ausgang der Schweißmaschine (3) und am Eingang der die Endlos-Stange (8) verarbeitenden Einheit (11) je eine Vorschubeinheit (7, 7') vorgesehen sind, deren Arbeitsgeschwindigkeiten den zugehörigen Einheiten entsprechend gewählt sind und durch entsprechende Steuerungen überwacht werden.

6.  Vorrichtung nach Anspruch 5,

    dadurch gekennzeichnet,

    daß die Schweißmaschine (3) eine Reibschweißmaschine

    ist.

1/1

Europäisches
Patentamt

**EUROPÄISCHER RECHERCHENBERICHT**

0008050
Nummer der Anmeldung

EP 79 102 696.6

| Kategorie | EINSCHLÄGIGE DOKUMENTE | | KLASSIFIKATION DER ANMELDUNG (Int.Cl.3) |
|---|---|---|---|
| | Kennzeichnung des Dokuments mit Angabe, soweit erforderlich, der maßgeblichen Teile | betrifft Anspruch | |
| | CH - A - 351 475 (USINES TORNOS) <br> * Seite 1, Zeilen 14 bis 65, Seite 3, Zeilen 60 bis 86 * <br> --- | 1,3,4 | B 23 Q  7/00 <br> B 21 D  43/00 <br> B 23 B  13/00 <br> B 23 K  31/00 <br> B 65 H  69/08 |
| | DE - B - C 99 94 Ib/49a (TH. CALOW) <br> * Seite 2, Zeilen 26 bis 46 und 105 bis 114 * <br> --- | 1,3 | |
| | AT - B - 218 457 (VEB KONSTRUKTIONS-BÜRO FÜR SCHWERMASCHINENBAU MAGDEBURG) <br> * Seite 2, Zeilen 11 bis 51 * <br> --- | 1, 3-5 | **RECHERCHIERTE SACHGEBIETE (Int. Cl.3)** <br><br> B 21 B <br> B 21 C <br> B 21 D  43/00 <br> B 23 B  13/00 <br> B 23 K |
| | US - A - 3 990 620 (GELLNER et al.) <br> * Spalte 1, Zeilen 1 bis 24, Spalte 2, Zeile 50 bis Spalte 4, Zeile 58 * <br> --- | 1-3 | B 23 P  23/04 <br> B 23 Q  7/00 <br> B 65 H  69/08 |
| | DE - A - 1 515 166 (SIEMENS) <br> * Anspruch 1 * <br> --- | 1,3 | |
| | US - A - 503 830 (L. COOK) <br> * Seite 1, Zeile 33 bis Seite 2, Zeile 45 * <br> --- <br> ./.. | 1,3,4 | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

X  Der vorliegende Recherchenbericht wurde für alle Patentansprüche erstellt.

| Recherchenort | Abschlußdatum der Recherche | Prüfer |
|---|---|---|
| Berlin | 23-10-1979 | MARTIN |

EPA form 1503.1  06.78

Europäisches
Patentamt

**EUROPÄISCHER RECHERCHENBERICHT**

0008050

Nummer der Anmeldung

EP 79 102 696.6

— Seite 2 —

| Kategorie | Kennzeichnung des Dokuments mit Angabe, soweit erforderlich, der maßgeblichen Teile | betrifft Anspruch |
|---|---|---|
| | FR - A - 2 107 818 (BRABANTIA)<br>* Seite 1, Zeile 29 bis Seite 2, Zeile 6 * | 4 |

**EINSCHLÄGIGE DOKUMENTE**

**KLASSIFIKATION DER ANMELDUNG (Int.Cl.3)**

**RECHERCHIERTE SACHGEBIETE (Int. Cl.3)**